# EUROPEAN PATENT APPLICATION

(11) **EP 0 551 101 A2**
(43) Date of publication of application: **14.07.1993**
(21) Application number: 93100098.8
(22) Date of filing: 06.01.1993
(51) Int. Cl.: G06K 7/10

(54) **Bar code entry method for computer operations**

(30) Priority: 07.01.1992 US 817574
(71) Applicant: Becton Dickinson and Company, Franklin Lakes, New Jersey 07417-1880 (US)
(72) Inventor: Meehan, Michael M., Phoenix, Maryland 21131 (US); Meehan, Gregory V., Clarksville, Maryland 21029 (US); Amstrong, Robert E., Hunt Valley, Maryland 21031 (US)
(74) Representative: Selting, Günther, Dipl.-Ing.

(57) **Abstract**

An easy, rapid method for the entry and manipulation of data using bar code technology is presented.

Briefly, the operational commands commonly used in the input of data into a particular laboratory instrument computer system are assigned bar code designations. These bar codes are then printed on a card which can be mounted, temporarily or permanently, on the laboratory instrument, and can be subsequently read by a bar code reader, thereby permitting the user to provide instructions to the instrument without the need for a keyboard interface.

## Description

### BACKGROUND OF INVENTION

As the automation of medical test procedures progresses, it has become increasingly desirable to provide instrumentation which is relatively "hands-free", i.e. instrumentation which limits the amount of technician time required for operation. This has led to the development of a number of instruments which utilize computer technology to track a sample and collect and record test data; such systems are particularly useful when samples are to be monitored, either periodically or continuously, over an extended period of time.

Such systems suffer from the drawback, however, of requiring significant amounts of technician time for the logging of samples into and out of the system, as well as for periodic status checks, etc. Further, such inputs are generally made via a keyboard interface which may be quite fragile and incapable of withstanding the environments of some laboratories.

Because of this, a more efficient data entry system is desirable.

### SUMMARY OF INVENTION

This invention presents an easy, rapid method for the entry and manipulation of data using bar code technology. Briefly, the operational commands (as used herein, operational command means one or more computer commands performed to achieve a desired result) commonly used in the input of data into the system are assigned bar code designations. The bar codes are then printed on a card which can be mounted, temporarily or permanently, on the instrument itself or in a location easily accessible to the operator.

These codes can then be read by a bar code reader and, thus, will permit the user to instruct the instrument without the need for a keyboard interface. This greatly increases sample through-put and enhances user efficiency.

### DETAILED DESCRIPTION OF INVENTION

In the method of this invention, commands commonly used for the manipulation or entry of data in a computerized instrument are assigned a bar code identification which is programmed into the computer. Each bar code, thus, will represent a command or series of commands to the computer which will be followed when the bar code is read by a bar code reader and communicated to the computer.

It is anticipated that this list of commands will be as large or as small as the user's needs dictate, bearing in mind space limitations (for the bar code display). In a preferred embodiment, this system is used in conjunction with an automated bacterial blood culture analyzer, and commands formatted in bar code include the following:
1. Remove positives
2. Remove negatives
3. Entry of sample vial
4. Identification of sample vial
5. Error resolution
   a. Missing sample vial(s)
   b. Return of sample vial(s)
   c. Bad station
These are the same commands which are included in the computer menu for keyboard input.

Thus, the use of the bar code card permits operations to be accomplished easily and efficiently, with minimum effort required by the operator. In a preferred embodiment, each bar code printed on the card is accompanied by a textual description of the command, near the bar code identification e.g. input data, delete data, etc. Thus, an inexperienced operator can be trained in a relatively short time to perform data entry and manipulations.

Further, the use of the bar codes card permits the unit to be used in foreign countries without the need for programming foreign language terms into the computer. Since the bar codes themselves deliver the operational commands to the computer, it is only necessary to label the codes with the textual description of the operation commands in the foreign language rather than English, the commands directly to the computer will remain the same. Thus, the operator will be able to read the code in his or her native language, and use the bar code to input it into the computer. This greatly facilitates the use of any instrument, so equipped, in foreign countries, as only the labels need be translated.

While the preferred embodiment of this invention is in the field of medical laboratory instrumentation, it is to be recognized that the method of this invention has utility in any instruments which perform data entry and manipulation. Briefly, in all such instruments, the operational commands are inputted using bar code identifications by means of a bar code reader.

It is apparent that many modifications and variations of this invention as hereinabove set forth may be made without departing from the spirit and scope hereof. The specific embodiments described are given by way of example only and the invention is limited only by the terms of the appended claims.

## Claims

1. In a process for the entry or manipulation of data in a computer wherein operational commands are inputted into said computer, the improvement comprising:
(i) assigning a separate bar code identification to one or more of said operational commands;
(ii) programming each of said bar code identification(s) into the computer such that the computer will execute the desired operational command when the bar code identification corresponding to the desired operational command is inputted into the computer; and
(iii) inputting the bar code identification into the computer to execute the desired operational command.

2. The process of Claim 1 wherein a plurality of operational commands is assigned bar code identifications.

3. The process of Claim 2 wherein said bar codes are printed on a card.

4. The process of Claim 3 wherein the card includes a textual description of each operation command proximal to the bar code identification for said operational command.

5. In an instrument which comprises a means for the entry and manipulation of data in a computer, the improvement comprising including in said instrument:
(i) a card containing a plurality of bar code identifications, each corresponding to a separate operational command, such that when the bar code identification is inputted into the system desired operational command is executed by the computer; and
(ii) a means to input said bar code identification into said instrument.

6. The instrument of Claim 5 wherein the card includes a textual description of each operational command proximal to the bar code identification for said operational command.

7. The instrument of Claim 5 wherein the means to input the bar code identification is a bar code reader.

8. A medical laboratory instrument of Claim 5.

9. A blood culture analyzer of Claim 5.

10. The blood culture analyzer of Claim 9 wherein the operational commands include remove positives, remove negatives, enter sample vial, identify sample vial, and resolve errors.
